# EUROPÄISCHE PATENTSCHRIFT

(11) **EP 0 391 256 B1**
(45) Veröffentlichungstag und Bekanntmachung des Hinweises auf die Patenterteilung: **05.01.1994**
(21) Anmeldenummer: 90106031.9
(22) Anmeldetag: 29.03.1990
(51) Int. Cl.: G01N 15/02

(54) **Vorrichtung und Verfahren zum Bestimmen der Korngrössenverteilung und der Gesamtkonzentration von Partikeln in einem Gas, insbesondere in Luft**
Device and method for ascertaining the particle size distribution and particle total concentration in a gas, especially in air
Dispositif et procédé pour la détermination de la distribution de tailles de particules et la concentration globale de particules dans un gaz, en particulier dans l'air

(30) Priorität: 07.04.1989 DE 3911419
(43) Veröffentlichungstag der Anmeldung: 10.10.1990
(73) Patentinhaber: GRIMM LABORTECHNIK GMbH & Co. KG, D-83404 Ainring (DE)
(72) Erfinder: Sauer, Claus-Wolfgang, D-8228 Freilassing (DE); Grimm, Hans-Jürgen, D-8232 Bayrisch-Gmain (DE)
(74) Vertreter: Liesegang, Roland, Dr.-Ing.

(56) Entgegenhaltungen:
- EP-A- 0 324 413
- GB-A- 2 022 816
- US-A- 2 997 597
- US-A- 4 788 443
- MEASUREMENT TECHNIQUES, Band 31, Nr. 1, Januar 1988, Seiten 85-88, Plenum Publishing Corp., New York, US; A.V. KOZLOV et al.: "Gravimetric calibration for the SPKP-1 aerosol threshold concentration detector"
- THE REVIEW OF SCIENTIFIC INSTRUMENTS, Band 41, Nr. 7, Juli 1970, Seiten 978-983; W.J. MOROZ et al.: "A portable counter and size analyzer for airborne dust"

## Beschreibung

Die Erfindung betrifft eine Vorrichtung und ein Verfahren zum Bestimmen der Korngrößenverteilung und der Gesamtkonzentration von Partikeln in einem Gas, inbesondere in Luft, mit den Merkmalen des Oberbegriffs des Anspruchs 1 (GB-A-2 022 816).

Derartige Vorrichtungen werden schon seit langem im Bergbau, wegen des zunehmenden Umweltbewußtseins in letzter Zeit aber auch verstärkt in vielen anderen Bereichen eingesetzt. Sie dienen dazu, Aussagen über die Beschaffenheit von Gasen, und insbesondere von Atemluft zu machen, um aufgrund dieser Aussagen geeignete Maßnahmen zur Luftreinhaltung ergreifen zu können.

Aus der deutschen Zeitschrift "Glückauf 90", 1954, Seiten 455 bis 460 und der deutschen Zeitschrift "Staub-Reinhaltung Luft", Nr. 29, 1969, Seiten 105 bis 113, sowie Nr. 43, 1983, Seiten 490 bis 494, sind Vorrichtungen zur Bestimmung der Staubkonzentration in Luft bekannt.

Die mittels dieser Vorrichtungen ermittelten Werte sind jedoch sehr ungenau. Beispielsweise haben Tests ergeben, daß das in der Zeitschrift "Staub-Reinhaltung Luft", Nr. 43, 1983, Seiten 490 bis 494, beschriebene Gerät "Simslin II" selbst dann, wenn es mit dem Gravimetriemeßgerät VC 25 kalibriert wird, noch mit einem Fehler von ±20 % behaftet ist, vgl. linke Spalte, unten, Seite 494, aaO. Darüber hinaus ist kein in der der Anmelderin bekannten Literatur beschriebenes Gerät dazu in der Lage, sowohl die Gesamtkonzentration als auch die Korngrößenverteilung von Partikeln in einem Gas, insbesondere in Luft, mit ausreichender Exaktheit zu bestimmen.

Der Erfindung liegt die Aufgabe zugrunde, eine Vorrichtung bzw. ein Verfahren der eingangs genannten Art anzugeben, die sowohl die Korngrößenverteilung als auch die Gesamtkonzentration von Partikeln in Gasen, insbesondere in Luft, mit hoher Genauigkeit ermitteln kann.

Erfindungsgemäß wird die gestellte Aufgabe bei einer Vorrichtung der eingangs genannten Art durch Anspruch 1 und bei einem Verfahren der eingangs genannten Art durch Anspruch 12 gelöst.

Mit der erfindungsgemäßen Vorrichtung bzw. dem erfindungsgemäßen Verfahren werden somit die mittels der Zähleinrichtungen teilweise ungenau ermittelbare Korngrößenverteilung und die mittels der Integriereinrichtung ermittelte Gesamtkonzentration zueinander in Beziehung gesetzt, um aus der Zusammenschau beider Werte die Korngrößenverteilung verläßlich zu bestimmen.

Dabei kann erfindungsgemäß vorgesehen sein, daß der Vergleich unter Verhältnisbildung erfolgt, während der Zwischenwert für die Gesamtkonzentration unter Summenbildung ermittelt wird.

Einschlägige Normen für die Staubmessung in Luft legen fest, daß zumindest für einen Korngrößenbereich von 0,5 µm bis 10 µm verläßliche Werte zu ermitteln sind. Dies ist darin begründet, daß Partikel mit einer Korngröße von unter 0,5 µm für die menschliche Lunge kaum noch schädlich sind, während Partikel mit einer Korngröße von mehr als 10 µm schwer genug sind, um ausreichend schnell zu Boden zu sinken, so daß auch diese Partikel ungefährlich sind.

Auf der anderen Seite ist es nach gegenwärtigem Stand der Technik aufwendig, mittels der Impulszählung Partikel mit einer Korngröße von unter 0,7 µm zu erfassen.

Daher sieht eine bevorzugte Ausgestaltung der erfindungsgemäßen Vorrichtung bzw. des erfindungsgemäßen Verfahrens vor, daß die Untergrenze des untersten Korngrößenbereiches zwischen 0,7 µm und 1,0 µm liegt und die Korrektur darin besteht, daß die sich aus dem Vergleich der Gesamtkonzentration mit dem Zwischenwert für die Gesamtkonzentration ergebende Restkonzentration dem Korngrößenbereich von 0,5 µm bis zu der Untergrenze zugeordnet wird.

Mit anderen Worten wird aus den in den einzelnen Korngrößenbereichen bestimmten Anzahlen von Partikeln der Zwischenwert für die Gesamtkonzentration ermittelt, welcher wegen der Nichterfassung des Korngrößenbereiches von 0,5 µm bis zu der Untergrenze kleiner als die mittels der Integriereinrichtung erfaßte Gesamtkonzentration ist. Da die Differenz zwischen diesen beiden Werten in aller Regel von Partikeln mit einer Korngröße von 0,5 µm bis zu der Untergrenze herrührt, wird aus der Differenz die entsprechende Anzahl von Partikeln mit einer Korngröße in diesem Bereich ermittelt.

Der Fehler, der sich dadurch ergibt, daß somit Partikel mit einer Korngröße von weniger 0,5 µm und selten auftretende Partikel mit einer Korngröße von mehr als 10 µm nicht berücksichtigt bzw. dem Korngrößenbereich von 0,5 µm bis zu der Untergrenze zugeordnet werden, ist vernachlässigbar klein. Im übrigen ist festzuhalten, daß ein solcher Fehler nur dazu führen kann, daß zu hohe Konzentrationen in dem gesundheitsgefährdenden Bereich angegeben werden, so daß diese Angaben unter dem gesundheitlichen Aspekt immer auf der "sicheren Seite" liegen.

Es ist erfindungsgemäß bevorzugt, daß drei jeweils einer Zähleinrichtung zugeordnete Korngrößenbereiche vorgesehen sind, nämlich: 1 µm bis 2 µm, 2 µm bis 5 µm und 5 µm bis 10 µm.

Erfindungsgemäß kann die Empfangseinrichtung von einer PIN-Diode gebildet sein. Diese ist bevorzugt so angeordnet, daß sie die 90°-Streuung des Lichtes an den Partikeln erfaßt.

Die 90°-Streuung ist zwar nicht so intensiv wie die Vorwärtsstreuung. Die Vorwärtssstreuung wird jedoch in erheblich stärkerem Maße von den Brechungsindizes der streuenden Partikel beeinflußt als die 90°-Streuung.

Zur besseren Erfassung der einzelnen Partikel bzw. des von diesen ausgehenden Streulichts kann erfindungsgemäß ferner vorgesehen sein, daß die Empfangseinrichtung einen Spiegel umfaßt, der der PIN-Diode bezüglich der streuenden Partikel gegenüberliegt.

Um möglichst gleichförmige Meßbedingungen zu gewährleisten, kann bei der erfindungsgemäßen Vorrichtung eine geregelte Pumpe mit konstantem Fördervolumen zum Erzeugen und Aufrechterhalten des Probengasstromes vorgesehen sein.

Zur Steigerung der Genauigkeit kann ferner erfindungsgemäß eine Initialisiereinrichtung mit einer Leuchtdiode und einem Photowiderstand vorgesehen sein.

Ferner kann eine Nullabgleich-Einrichtung vorgesehen sein, die ein erstes steuerbares Ventil zum Unterbinden des Probengasstromes, ein Filter zum Spülen der Meßzelle und eine steuerbare Stromquelle zum Erzeugen eines dem Ruhestrom durch die PIN-Diode entgegengesetzten, diesem betragsmäßig gleichen Stromes umfaßt.

Zu Dokumentationszwecken und für eine evtl. weitere Verarbeitung kann sich die erfindungsgemäße Vorrichtung ferner durch eine entnehmbare Speicherkarte zum Ablegen der für die Korngrößenverteilung und die Gesamtkonzentration ermittelten Werte auszeichnen.

Schließlich kann bevorzugt zum Steigern der Genauigkeit der ermittelten Werte eine gravimetrische Einrichtung mit einem Submicronfilter zum Kalibrieren vorgesehen sein. Das Submicronfilter kann auch zur laufenden Dokumentation dienen.

Weitere Merkmale und Vorteile der Erfindung ergeben sich aus der nachstehenden Beschreibung, in welcher ein bevorzugtes Ausführungsbeispiel der Erfindung anhand von Zeichnungen mit weiteren Einzelheiten näher erläutert ist. Dabei zeigen
- Fig. 1: den prinzipiellen Aufbau der erfindungsgemäßen Vorrichtung,
- Fig. 2: ein Blockschaltbild der Auswerteinrichtung,
- Fig. 3: die Energieversorgung der Vorrichtung und
- Fig. 4: schematisch die Meßzelle der erfindungsgemäßen Vorrichtung nach Figur 1 in einer Darstellung quer zur Luftströmungsrichtung.

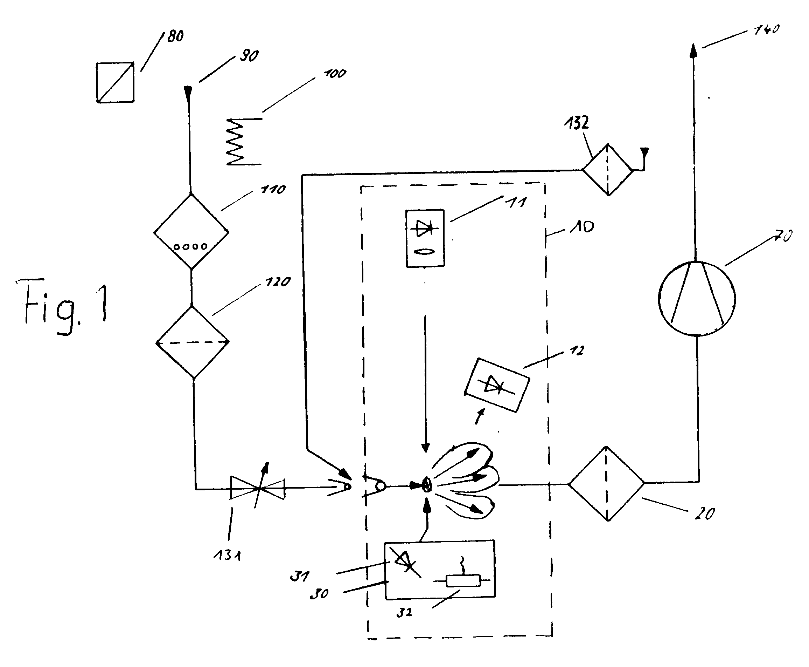

Gemäß Fig. 1 kommt die zu untersuchende Luft über einen Lufteinlaß 90 in die Vorrichtung, wobei mittels eines Temperatur/Spannungs-Wandlers 80 die Temperatur der Luft erfaßt wird. Die Luft wird mittels einer Heizung 100 aufgeheizt, um evtl. vorhandene feine Wassertröpfchen zum Verdunsten zu bringen. Sodann passiert die Luft ein Filter 110 mit Silicagel zur weiteren Trocknung und danach ein Vorfilter 120 zur Absonderung von Partikeln mit einer Korngröße über 10 µm. Danach gelangt die Luft in die eigentliche Meßzelle 10, in der sich eine Laserdiode 11 mit zugehöriger Optik sowie eine PIN-Diode 12 befinden. Die Laserdiode und die PIN-Diode sind einem Gaslaser bzw. einem Photomultiplier vorzuziehen, weil sie unempfindlicher gegen Erschütterungen sind. Im übrigen ist ihre Lebensdauer verglichen mit einem Gaslaser oder einem Photomultiplier erheblich größer. Die Laserdiode 11 und die PIN-Diode 12 stellen den Kern eines Streulichtmeßgerätes dar.

In der Meßzelle 10 befindet sich einen Initialisiereinrichtung 30, die von einer Leuchtdiode 31 und einem Photowiderstand 32 gebildet ist. Die Funktionsweise der Initialisiereinrichtung 30 ist im Zusammenhang mit der Beschreibung der Betriebsweise der erfindungsgemäßen Vorrichtung noch näher erläutert.

Nach Passieren der Meßzelle 10 wird die Luft einem hydrophoben Submicronfilter 20 zugeführt, welches zu einer gravimetrischen Einrichtung zum Kalibrieren gehört.

Zur Bewegung der Luft durch die Gesamtanordnung dient eine geregelte Pumpe 70, welche ein konstantes Fördervolumen von 1,4 l/min bis 2,8 l/min liefert. Die Luft verläßt die Vorrichtung durch einen Luftauslaß 140. Die Luft durchströmt die Meßzelle 10 mit hoher Geschwindigkeit (≧ 20 m/s). Zwischen dem Vorfilter 120 und der eigentlichen Meßzelle 10 befindet sich ein steuerbares Ventil 131. Über ein Filter 132 kann der Meßzelle 10 sehr reine Spülluft zugeführt werden. Die Funktion des Ventiles 131 und des Filters 132 ist unten im Zusammenhang mit der Nullabgleich-Einrichtung beschrieben.

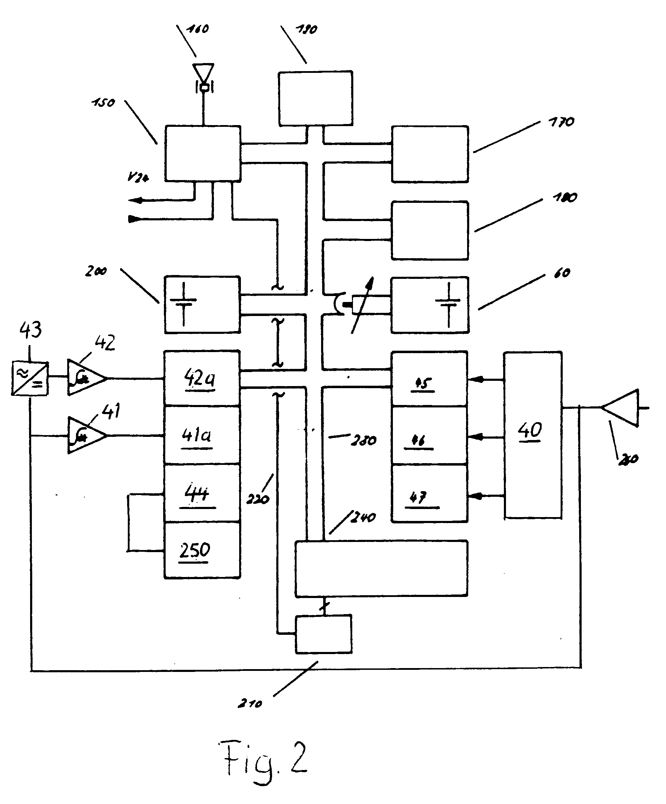

Fig. 2 zeigt eine Einrichtung zur Auswertung des mittels der Meßanordnung nach Fig. 1 gewonnenen Signals, das der Einrichtung über einen Verstärker 260 zugeführt wird. Die Einrichtung umfaßt eine CPU 150, welche mit einer V-24-Schnittstelle in Verbindung steht. Bei Unregelmäßigkeiten oder bei Überschreiten von Grenzwerten für die Gesamtkonzentration oder für Konzentrationen in bestimmten Korngrößenbereichen kann über einen Lautsprecher 160 Alarm gegeben werden. Ferner umfaßt die Auswerteinrichtung einen 8 K RAM 170 und einen 16 K EPROM 190. Die ermittelten Werte werden zum einen auf einer 16 K Speicherkarte 60 abgelegt und zum anderen mittels einer Anzeige 190 dargestellt. Zur zeitbezogenen Anzeige bzw. Speicherung der Daten ist eine Uhr 200 vorgesehen. Zur Bedienung der Vorrichtung dient eine Tastatur 210, welche über eine "Interrupt"-Leitung 220 mit der CPU 150 und über eine weitere Leitung mit einer 24 bit-parallel-I/O-Einheit 240 verbunden ist. Letztere steht über einen Datenbus 230 mit allen anderen Elementen der Gesamtanordnung in Verbindung. An die I/O-Einrichtung 240 gehen ferner verschiedene Signale: Laser EIN, Pumpe EIN, Kalibriereinrichtung EIN, Multiplexer, Kontrolle V 24, Kontrolle Speicher.

Das Signal des Streulichtmeßgerätes 10 wird einer Impulsanalyseeinrichtung 40 zugeführt, welche dieses Signal entsprechend der Größe der erfaßten Partikel klassifiziert und in unten näher erläuterter Weise klassenweise getrennt innerhalb der Gesamtanordnung weiterleitet.

An einen Analog/Digital-Wandler 44 ist ein Multiplexer 250 angeschlossen, welcher Signale betreffend den Motorstrom, die Temperatur der angesaugten Luft, der Spannung der Energieversorgung und der Speicherspannung empfängt.

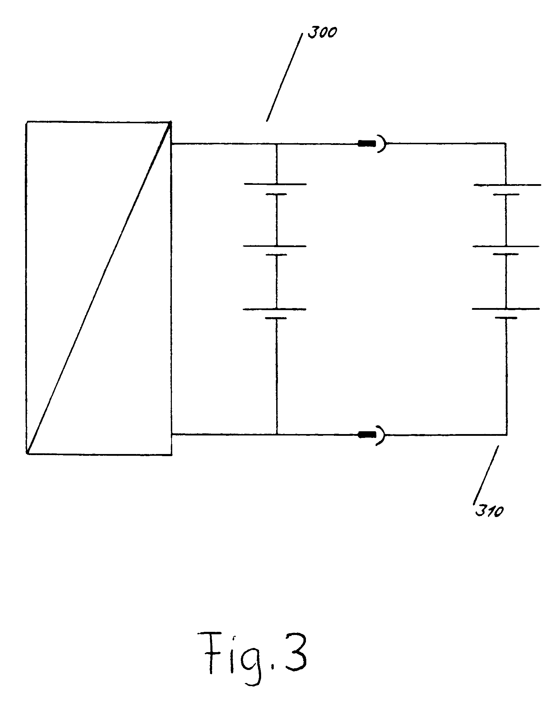

Um die Vorrichtung in verschiedenen Bereichen möglichst flexibel einsetzen zu können, ist eine Spannungsversorgung gemäß Fig. 3 vorgesehen, welche eine Grundbatterie 300 und eine Zusatzbatterie 310 umfaßt.

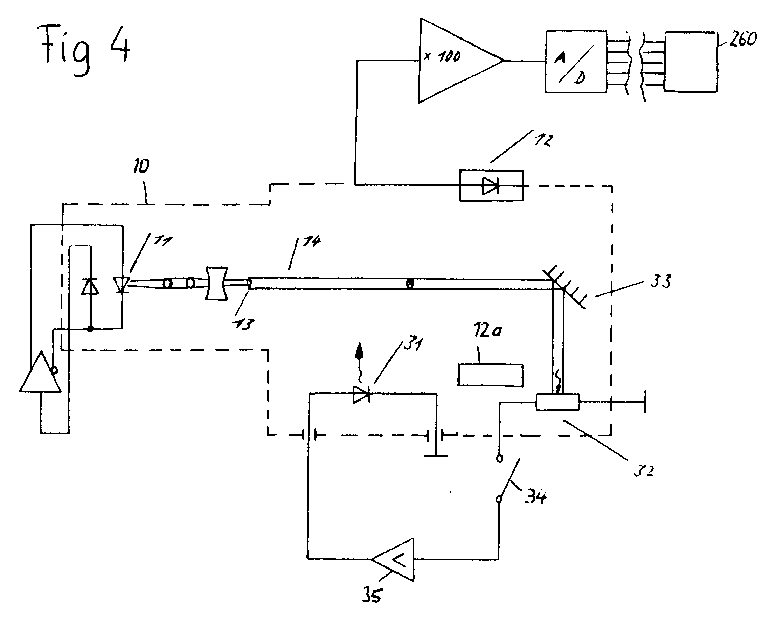

Fig. 4 zeigt die Anordnung sowie die Verschaltung der einzelnen Elemente der Vorrichtung. In Fig. 4 wird ein Lichtstrahl von der Laserdiode 11 erzeugt. Dieser passiert eine Optik, deren äußerste Linse mit 13 bezeichnet ist. Der mit Partikeln beladene Luftstrom kreuzt den mit 14 bezeichneten Strahlengang des Laserstrahls senkrecht zur Zeichenebene von Fig. 4. Jeweils auf gegenüberliegenden Seiten sowohl bezüglich des Strahlengangs 14 als auch der Luftstromrichtung sind die PIN-Diode 12 und ein Spiegel 12a angeordnet. Das von den hindurchtretenden Partikeln in auf dem Strahlengang 14 senkrecht stehender Richtung gestreute Licht wird somit von der PIN-Diode 12 zum einen direkt und zum anderen über den Spiegel 12a indirekt empfangen.

In seinem weiteren Verlauf trifft der Laserstrahl auf eine Lichtfalle 33, z.B. einen teildurchlässigen Spiegel, der etwa 99 % des einfallenden Lichts ausblendet . Das restliche Laserlicht, also etwa 1 %, fällt auf den Photowiderstand 32. Der Photowiderstand 32 kann über einen Schalter 34 und einen Verstärker 35 auf die Leuchtdiode 31 zurückgekoppelt werden.

Im folgenden ist die Betriebsweise der in den Figuren dargestellten Vorrichtung beschrieben.

Bei Inbetriebnahme wird zunächst der Dunkelstrom der PIN-Diode 12 gemessen. Daraufhin erfolgt eine Messung mit dem Laserlicht. Aus der Differenz zwischen dem Dunkelstrom und dem mit Laserlicht gemessenen Strom kann dann eine Aussage über das Verhältnis der Lichtintensität zu dem Diodenstrom gemacht werden.

Sodann erfolgt eine Initialisierungsmessung. Das Licht der Laserdiode 11 hat eine konstante Leistung von 3 mW. Es tritt durch die Optik hindurch, wobei die äußerste Linse 13 der Optik verschmutzt sein kann. Darüber hinaus können sich Verunreinigungen auf der PIN-Diode 12 sowie auf dem Spiegel 12a befinden. Wird nun der Schalter 34 geschlossen, so erzeugt die Leuchtdiode 31 Licht, dessen Intensität ca. 100mal größer als die von einem 10 µm großen Partikel hervorgerufene Streulichtintensität ist und gerade noch von dem Verstärker 260 linear verarbeitet werden kann.

Sollte sich Staub in der Meßzelle 10, insbesondere auf der Linse 13 der Optik oder auf der PIN-Diode 12 oder dem Spiegel 12a abgelagert haben, so sind die Transmission < 1 und der am Ausgang des Verstärkers 260 anliegende Wert kleiner als der Wert im sauberen Zustand. Bei 90 %iger Transmission wird Alarm gegeben. Bei darunterliegenden Werten kann mathematisch korrigiert werden. Es ist vorteilhaft, die Leuchtdiode 31 und die PIN-Diode 12 so zueinander anzuordnen, daß der von der Leuchtdiode 31 auf die PIN-Diode 12 treffende Strahl den Laserstrahl im wesentlichen rechtwinklig schneidet.

Durch die beschriebene Initialisierungsmessung gewinnt man eine Aussage über die Einflüsse einer evtl. Verunreinigung der Meßzelle 10, so daß ein Korrekturfaktor I zur Korrektur der mittels der Meßzelle 10 gewonnenen Werte zur Initialisierung der Vorrichtung erhalten wird. Ist der Korrekturfaktor zu groß, wird Alarm ausgelöst, weil die Vorrichtung infolge der Verunreinigungen keine verläßlichen Werte liefern kann.

Nach der Initialisierung erfolgt ein erster Nullabgleich bei eingeschalteter Laserdiode 11. Dazu schließt die CPU 150 das Ventil 131, so daß die Meßzelle 10 über das Filter 132 mit sauberer Luft gespült wird. Dadurch wird der Laserstrahl während des Nullabgleichs nicht gestreut. Gleichzeitig wird der durch die PIN-Diode 12 fließende Ruhestrom erfaßt, und es wird eine (nicht gezeigte) steuerbare Stromquelle von der CPU 150 so angesteuert, daß der Ruhestrom durch die PIN-Diode 12 gerade aufgehoben wird. Dadurch kann jeglicher Umwelteinfluß (Temperaturschwankungen und dgl.) eliminiert werden.

Der Nullabgleich wird in regelmäßigen Abständen zwischen den eigentlichen Messungen ausgeführt, um den sich ggf. stark ändernden Umweltbedingungen jeweils Rechnung zu tragen und deren Einfluß auf die Meßergebnisse auszuschalten.

Nach dem ersten Nullabgleich erfolgt die erste eigentliche Messung. Dazu wird das Ventil 131 wieder geöffnet, woraufhin Probenluft die Meßzelle 10 durchströmt. Die in der Luft enthaltenen Partikel bewirken, daß das von der Laserdiode 11 ausgesandte Licht gestreut wird und auf die PIN-Diode 12 trifft. Das von der PIN-Diode abgegebene Signal wird über den Verstärker 260 der Impulsanalyseeinrichtung 40 zugeführt. Diese erfaßt die in dem Signal enthaltenen Impulse und klassifiziert diese Impulse entsprechend den Korngrößen derjenigen Partikel, welche die Streuung verursachen. Bei diesem Ausführungsbeispiel sind drei Korngrößenbereiche vorgesehen: 1 µm bis 2 µm, 2 µm bis 5 µm und 5 µm bis 10 µm. Entsprechend dem Analyseergebnis werden jeweils Zähler 45 bis 47 angesteuert.

Gleichzeitig wird das Signal zum einen direkt an einen ersten Integrator 41 mit nachgeschaltetem A/D-Wandler 41a und zum anderen über einen Gleichrichter 43 an einen zweiten Integrator 42 mit nachgeschaltetem A/D-Wandler 42a gegeben. Dadurch werden sowohl der Gleich- als auch der Wechselanteil des Signales integriert.

Die CPU 150, welcher die Ausgangsignale der Zähler 45 bis 47 und der A/D-Wandler 41a und 42a über den Datenbus 230 zugeführt werden, ermittelt aus den Anzahlen der Partikel in den drei erfaßten Korngrößenbereichen einen Zwischenwert für die Gesamtkonzentration, indem sie die den Anzahlen der Partikel in den einzelnen Korngrößenbereichen entsprechenden Einzelkonzentrationen ermittelt und diese aufsummiert. Dann vergleicht die CPU 150 den Zwischenwert mit der Gesamtkonzentration, die sich aus der oben beschriebenen Integration ergibt, unter Verhältnisbildung.

Da bei der Ermittlung des Zwischenwertes für die Gesamtkonzentration nur Partikel mit einer Korngröße von 1 µm bis 10 µm berücksichtigt werden, in aller Regel jedoch auch Partikel mit Korngrößen von 0,5 µm bis 1 µm in der Luft vorhanden sind, ist die sich aus der Integration ergebende Gesamtkonzentration größer als der Zwischenwert der Gesamtkonzentration, welcher sich nur auf einen Teilbereich der möglichen Korngrößen beschränkt.

Da Partikel mit einer Korngröße von mehr als 10 µm bereits mittels des Filters 120 herausgefiltert worden und Partikel mit einer Korngröße von weniger als 0,5 µm wegen der Abnahme der Streulichtintensität in diesem Korngrößenbereich mit der 6ten Potenz des Partikeldurchmessers vernachlässigbar sind, kann die verbleibende Differenz zwischen den beiden Werten für die Gesamtkonzentration praktisch ohne Fehler Partikeln mit einer Korngröße von 0,5 µm bis 1 µm zugeordnet werden.

Obwohl nur eine Impulszählung verläßliche Werte betreffend die Korngrößenverteilung von Partikeln in Luft liefern kann, eine Impulszählung jedoch bei Partikeln mit einer Korngröße von weniger als 1 µm nicht mit ausreichender Genauigkeit durchgeführt werden kann, ist die Vorrichtung nach den Figuren 1 bis 4 dennoch dazu in der Lage, die Korngrößenverteilung bis hinunter zu einer Korngröße von 0,5 µm verläßlich zu ermitteln.

Die Messung geht nicht kontinuierlich vor sich, sondern es erfolgen Einzelmessungen im 5-Sekunden-Abstand, wobei den Einzelmessungen immer wieder (z.B. im Minutenabstand) Nullabgleiche zwischengeschaltet sind. Wie oft ein Nullabgleich durchzuführen ist, hängt von den jeweiligen Bedingungen ab, d.h. davon, inwieweit sich das Umfeld ändert.

Die Meßdaten werden auf der entnehmbaren Speicherkarte 60 zusammen mit dem jeweiligen Meßzeitpunkt abgelegt, so daß der zeitliche Verlauf der ermittelten Werte festgehalten wird.

Parallel zu der Messung mittels des Streulichts sammeln sich alle die Meßzelle 10 passierenden Partikel in dem Submicronfilter 20. Dieser wird gravimetrisch ausgewertet. Die aus der gravimetrischen Auswertung erhaltenen Daten dienen zur Kalibrierung der mittels der Streulichtmessung gewonnenen Werte, wodurch die Genauigkeit der Gesamteinrichtung noch weiter gesteigert werden kann.

Es gibt Räume, beispielsweise unter Tage, bei denen die Staubart im wesentlichen immer gleich ist. Bei diesen Räumen kann die Kalibrierung auch mittels vorher gravimetrisch ermittelter Werte erfolgen, so daß bereits im Zeitpunkt der Streulichtmessung sehr genaue Meßwerte für die Korngrößenverteilung und die Gesamtkonzentration der in der Atmosphäre enthaltenen Partikel gewonnen werden können.

Die Vorrichtung nach den Figuren wiegt inklusive einer Zusatzbatterie, welche einen 8-Stunden-Schichtbetrieb erlaubt, nur etwa 2,5 kg, während das Gewicht für eine Betriebsdauer von 4 Stunden bei nur etwa 2 kg liegt. Die Abmessungen von 60 x 120 x 240 mm (4 Stunden) machen das Gerät leicht handhabbar und tragbar.

Die in der vorstehenden Beschreibung, den Ansprüchen sowie der Zeichnungen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Vorrichtung zum Bestimmen der Korngrößenverteilung und der Gesamtkonzentration von Partikeln in einem Gas, insbesondere in Luft, mit einer Meßzelle (10), die von einem Probengasstrom durchströmt wird und in der ein Lichtstrahl an den in dem Gas enthaltenen Partikeln gestreut wird, mindestens eine Empfangseinrichtung (12, 12a), welche das Streulicht zumindest teilweise empfängt und ein der Intensität des Streulichts entsprechendes Signal abgibt, und einer das genannte Signal aufnehmenden und verarbeitenden Auswerteeinrichtung (40 - 47, 150), wobei die Auswerteeinrichtung eine Impulsanalyseeinrichtung (40) und mindestens zwei Zähleinrichtungen (45, 46, 47) umfaßt, welche jeweils einem gesonderten Bereich von Korngrößen zugeordnet sind und von der Impulsanalyseeinrichtung (40) jeweils dann angesteuert werden, wenn in dem Signal Impulse auftreten, welche von erfaßten Partikeln mit einer Korngröße in dem ihnen zugeordneten Bereich herrühren, um eine Korngrößenverteilung zu erhalten,
**dadurch gekennzeichnet,**
daß zunächst eine vorläufige Korngrößenverteilung ermittelt wird, ohne den Korngrößenbereich kleinster Partikelgröße zu berücksichtigen,
daß eine Integriereinrichtung (41, 42) vorgesehen ist, welche das Signal integriert, um die Gesamtkonzentration der Partikel zu erhalten, und
daß die Auswerteeinrichtung (40 - 47, 150) so ausgebildet ist, daß sie aus der vorläufigen Korngrößenverteilung einen Zwischenwert für die Gesamtkonzentration ermittelt, diesen mit der von der Integriereinrichtung (41, 42) erhaltenen Gesamtkonzentration vergleicht und entsprechend dem Vergleichsergebnis die vorläufige Korngrößenverteilung korrigiert, um die vollständige, zu ermittelnde Korngrößenverteilung zu erhalten.

2. Vorrichtung nach Anspruch 1, **dadurch gekennzeichnet,** daß der Zwischenwert für die Gesamtkonzentration unter Summenbildung ermittelt wird.

3. Vorrichtung nach Anspruch 1 oder 2, **dadurch gekennzeichnet,** daß die Untergrenze des untersten Korngrößenbereiches zwischen 0,7 µm und 1 µm liegt und die Korrektur darin besteht, daß die sich aus dem Vergleich der Gesamtkonzentration mit dem Zwischenwert für die Gesamtkonzentration ergebende Restkonzentration dem Korngrößenbereich von 0,5 µm bis zu der Untergrenze zugeordnet wird.

4. Vorrichtung nach Anspruch 3, **dadurch gekennzeichnet,** daß drei jeweils einer Zähleinrichtung (45, 46, 47) zugeordnete Korngrößenbereiche vorgesehen sind, nämlich:
1 µm bis 2 µm, 2 µm bis 5 µm und 5 µm bis 10 µm.

5. Vorrichtung nach einem der vorangehenden Ansprüche, **dadurch gekennzeichnet,** daß die Empfangseinrichtung (12, 12a) eine PIN-Diode (12) umfaßt, die bezüglich des Lichtstrahls so angeordnet ist, daß sie die 90°-Streuung des Lichtes an den Partikeln erfaßt.

6. Vorrichtung nach Anspruch 5, **dadurch gekennzeichnet,** daß die Empfangseinrichtung (12, 12a) einen Spiegel (12a) umfaßt, der der PIN-Diode (12) bezüglich der streuenden Partikel gegenüberliegt.

7. Vorrichtung nach einem der vorangehenden Ansprüche, **gekennzeichnet durch** eine geregelte Pumpe (70) mit konstantem Fördervolumen zum Erzeugen und Aufrechterhalten des Probengasstromes.

8. Vorrichtung nach einem der vorangehenden Ansprüche, **gekennzeichnet durch** eine Initialisiereinrichtung (30) mit einer Leuchtdiode (31) und einem Photowiderstand (32).

9. Vorrichtung nach einem der vorangehenden Ansprüche, **gekennzeichnet durch** eine Nullabgleich-Einrichtung (131, 132), die ein steuerbares Ventil (131) zum Unterbinden des Probengasstromes, ein Filter (132) zum Spülen der Meßzelle (10) und eine steuerbare Stromquelle zum Erzeugen eines dem Ruhestrom durch die PIN-Diode (12) entgegengesetzten, diesem betragsmäßig gleichen Stromes umfaßt.

10. Vorrichtung nach einem der vorangehenden Ansprüche, **gekennzeichnet durch** eine entnehmbare Speicherkarte (60) zum Vorgeben von Parametern und/oder zum Ablegen der für die Korngrößenverteilung und die Gesamtkonzentration ermittelten Werte.

11. Vorrichtung nach einem der vorangehenden Ansprüche, **gekennzeichnet durch** eine gravimetrische Einrichtung mit einem Submicronfilter (20) zum Kalibrieren.

12. Verfahren zum Bestimmen der Korngrößenverteilung und der Gesamtkonzentration von Partikeln in einem Gas, insbesondere in Luft, bei dem ein Lichtstrahl in einer Meßzelle (10), die von einem Probengasstrom durchströmt wird, an den in dem Gas enthaltenen Partikeln gestreut wird, das Streulicht zumindest teilweise mittels mindestens einer Empfangseinrichtung (12, 12a) empfangen wird, die Empfangseinrichtung ein der Intensität des Streulichts entsprechendes Signal abgibt und das Signal von einer Auswerteeinrichtung (40 - 47, 150) empfangen wird, die das Signal auswertet, wobei die Auswerteeinrichtung eine Impulsanalysevorrichtung (40) und mindestens zwei Zähleinrichtungen (45, 46, 47) umfaßt, welche jeweils einem gesonderten Bereich von Korngrößen zugeordnet sind und jeweils dann angesteuert werden, wenn in dem Signal Impulse auftreten, welche von erfaßten Partikeln mit einer Korngröße in dem ihnen zugeordneten Bereich herrühren, um eine Korngrößenverteilung zu erhalten,
**dadurch gekennzeichnet,** daß die Auswerteeinrichtung zyklisch arbeitet, wobei ein Meßzyklus folgende Schritte umfaßt:
- zunächst wird eine vorläufige Korngrößenverteilung ermittelt, ohne den Korngrößenbereich kleinster Partikelgröße zu berücksichtigen,
- eine Integriereinrichtung (41, 42) integriert das Signal, um die Gesamtkonzentration der Partikel zu erhalten, und
- die Auswerteeinrichtung (40 - 47, 150) ermittelt aus der vorläufigen Korngrößenverteilung einen Zwischenwert für die Gesamtkonzentration, vergleicht diesen mit der von der Integriereinrichtung (41, 42) erhaltenen Gesamtkonzentration und korrigiert entsprechend dem Vergleichsergebnis die vorläufige Korngrößenverteilung, um die vollständige zu ermittelnde Korngrößenverteilung zu erhalten.

13. Verfahren nach nach Anspruch 12, **dadurch gekennzeichnet,** daß der Vergleich unter Verhältnisbildung erfolgt.

14. Verfahren nach nach Anspruch 12 oder 13, **dadurch gekennzeichnet,** daß der Zwischenwert für die Gesamtkonzentration durch Summenbildung ermittelt wird.

15. Verfahren nach einem der Ansprüche 12 bis 14, **dadurch gekennzeichnet,** daß die Untergrenze des untersten Korngrößenbereiches zwischen 0,7 µm und 1 µm liegt und die Korrektur darin besteht, daß die sich aus dem Vergleich der Gesamtkonzentration mit dem Zwischenwert für die Gesamtkonzentration ergebende Restkonzentration dem Korngrößenbereich von 0,5 µm bis zu der Untergrenze zugeordnet wird.

## Claims

1. Apparatus for determining the particle size distribution and the total concentration of particles in a gas, especially in air, comprising a measuring cell (10), through which a sample air stream flows and in which particles contained in the gas are scattered, at least one receiving means (12, 12a) which at least partially receives the scattered light and releases a signal corresponding to the intensity of the scattered light, and an evaluating means (40 - 47, 150) receiving and processing said signal, the evaluating means comprising a pulse analysis means (40) and at least two counting means (45, 46, 47) which are each associated with a particular range of particle sizes, and are then each controlled by the pulse analysis means (40) when pulses occur in the signal which stem from particles recorded having a particle size in the range associated with them, in order to achieve a particle size distribution,
**characterized** in that
firstly a preliminary particle size distribution can be determined without taking the particle size range of the smallest particle size into consideration,
an integrating means (41, 42) is provided which integrates the signal in order to obtain the total concentration of the particle, and
the evaluating means (40 - 47, 150) is so formed that it determines an intermediate value for the total concentration from the preliminary particle size distribution, compares this with the total concentration obtained from the integrating means (41, 42) and corrects the preliminary particle size distribution corresponding to the comparison result, in order to obtain the complete particle size distribution to be determined.

2. Apparatus according to claim 1,
**characterized** in that the intermediate value for the total concentration is determined by forming a sum.

3. Apparatus according to claim 1 or 2,
**characterized** in that the lower limit of the lowest particle size range is between 0.7 µm and 1 µm and the correction resides in that the remaining concentration resulting from the comparison of the total concentration and the intermediate value for the total concentration is associated with the particle size range 0.5 µm to the lower limit.

4. Apparatus according to claim 3,
**characterized** in that three particle size ranges each associated with one counting means (45, 46, 47) are provided , i.e. 1 µm to 2 µm, 2µm to 5µm and 5 µm to 10 µm.

5. Apparatus according to one of the preceding claims,
**characterized** in that the receiving means (12, 12a) includes a PIN diode (12) which is so arranged with respect to the light beam that it records the 90° scattering of the light onto the particles.

6. Apparatus according to claim 5,
**characterized** in that the receiving means (12, 12a) includes a mirror which lies opposite the PIN diode (12) with respect to the scattering particles.

7. Apparatus according to any one of the preceding claims,
**characterized** by a controlled pump (70) having constant volumetric displacement for generating and maintaining the sample air stream.

8. Apparatus according to any one of the preceding claims,
**characterized** by an initialising means (30) having a light-emitting diode (31) and a photo resistor (32).

9. Apparatus according to any one of the preceding claims,
**characterized** by a zero balancing means (131, 132) including a controllable valve (131) for preventing the sample gas stream, a filter (132) for rinsing the measuring cell (10) and a controllable power source for generating a direct current through the PIN diode opposing the closed-circuit current and of average amount.

10. Apparatus according to any one of the preceding claims,
**characterized** by a removable memory card (60) for prestoring parameters and/or for filing the values determined for the particle size distribution and the total concentration.

11. Apparatus according to any one of the preceding claims,
**characterized** by a gravimetrical means for calibration containing a submicron filter (20).

12. Method for determining the particle size distribution and the total concentration of particles in a gas, especially in air, in which in a measuring cell a light beam through which a sample gas stream flows is scattered onto the particles contained in the gas, the scattered light being at least partially received by means of at least one receiving means (12, 12a), the receiving means releasing a signal corresponding to the intensity of the scattered light and the signal being received by an evaluating means (40 - 47, 150) which evaluates the signal, the evaluating means comprising a pulse analysis means (40) and at least two counting means (45, 46, 47), each of which is associated with a specific range of particle sizes and are then each triggered when pulses occur in the signal which stem from obtained particles having a particle size in the range associated therewith, in order to obtain a particle size distribution,
**characterized** in that the evaluating means operates cyclically, a measuring cycle comprising the following steps:
- firstly a preliminary particle size distribution is determined without taking the particle size range of the smallest particle sizes into consideration,
- an integrating means (41, 42) integrates the signal in order to obtain the total concentration of the particles, and
- the evaluating means (40 - 47, 150) determines an intermediate value for the total concentration from the preliminary particle size distribution, compares this with the total concentration received from the integrating means (41, 42) and corrects the preliminary particle size distribution according to the comparison result, in order to obtain the complete particle size distribution to be determined.

13. Method according to claim 12,
**characterized** in that the comparison occurs by formation of a ratio.

14. Method according to claim 12 or 13,
**characterized** in that the intermediate value for the total concentration is determined by forming a sum.

15. Method according to any one of claims 12 to 14,
**characterized** in that the lower limit of the lowest particle size range is between 0.7 µm and 1 µm and the correction resides in that the remaining concentration resulting from the comparison of the total concentration and the intermediate value for the total concentration is associated with the particle size range 0.5 µm to the lower limit.

## Revendications

1. Dispositif de détermination de la distribution de dimensions et de la concentration globale de particules dans un gaz, notamment de l'air, comprenant une cellule de mesure (10) qui est parcourue par un courant de gaz échantillon et dans laquelle un faisceau luminex est diffusé par les particules contenues dans le gaz, au moins un dispositif capteur (12, 12a) qui reçoit au moins partiellement la lumière diffusée et qui fournit un signal correspondant à l'intensité de la lumière diffusée, et un dispositif d'évaluation (40-47, 150) recevant et traitant ledit signal, le dispositif d'évaluation comprenant un dispositif d'analyse d'impulsions (40) et au moins des dispositifs compteurs (45, 46, 47) dont chacun est associé à un certain domaine de dimension de particules et est commandé par le dispositif d'analyse d'impulsions (40) quand il se produit dans le signal des impulsions qui proviennent de particules captées ayant une dimension dans le domaine correspondant, pour obtenir une distribution de dimensions de particules,
caractérisé en ce que,
il est d'abord établi une distribution de dimensions de particules courante sans considérer le domaine des dimensions de particules les plus petites,
il est prévu un dispositif d'intégration (41, 42) intégrant le signal pour fournir la concentration globale des particules, et
le dispositif d'évaluation (40-47, 150) a une configuration propre à établir une valeur intermédiaire de la concentration globale à partir de la distribution de dimensions de particules courante, compare celle-ci à la concentration globale fournie par le dispositif d'intégration (41, 42) et corrige, selon le résultat de la comparaison, la distribution de dimensions de particules courante pour fournir la distribution de dimensions complète à obtenir.

2. Dispositif selon la revendication 1, caractérisé en ce que la valeur intermédiaire de la concentration globale est obtenue par sommation

3. Dispositif selon la revendication 1 ou 2, caractérisé en ce que la limite inférieure du domaine inférieur de dimensions de particules est comprise entre 0,7 µm et 1 µm et en ce que la correction consiste à associer au domine de dimensions de particules de 0,5 µm à la limite inférieure, la concentration résiduelle obtenue par la comparaison de la concentration globale et de la valeur intermédiaire de la concentration globale.

4. Dispositif selon la revendication 3, caractérisé en ce qu'il est prévu trois domaines de dimensions de particules dont chacun est associé à un dispositif de comptage (45, 46, 47), notamment :
1 µm à 2 µm, 2 µm à 5 µm et 5 µm à 10 µm.

5. Dispositif selon l'une quelconque des revendications précédentes, caractérisé en ce que le dispositif capteur (12, 12a) comprend une diode PIN (12) qui est disposée par rapport au faisceau de lumière pour capter la diffusion à 90° de la lumière sur les particules.

6. Dispositif selon la revendication 5, caractérisé en ce que le dispositif capteur (12, 12a) comprend un miroir (12a) qui est disposé du côté opposé à la diode PIN (12) par rapport aux particules diffusantes.

7. Dispositif selon l'une quelconque des revendications précédentes, caractérisé par une pompe volumétrique régulée (70) pour générer et maintenir le courant de gaz échantillon.

8. Dispositif selon l'une quelconque des revendications précédentes, caractérisé par un dispositif d'initialisation (30) comprenant une diode électroluminescente (31) et une résistance photosensible (32).

9. Dispositif selon l'une quelconque des revendications précédentes, caractérisé par un dispositif de réglage de zéro (131, 132) comprenant une soupape commandée (131) pour couper le courant de gaz échantillon, un filtre (132) pour rincer la cellule de mesure (10) et une source de courant commandée pour générer un courant opposé et égal en valeur absolue au courant de repos de la diode PIN (12).

10. Dispositif selon l'une quelconque des revendications précédentes, caractérisé par une carte de mémorisation (60) amovible pour fournir des paramètres et/ou stocker les valeurs obtenues de la distribution de dimensions de particules et de la concentration globale.

11. Dispositif selon l'une quelconque des revendications précédentes, caractérisé par un dispositif gravimétrique comprenant un filtre submicrométrique (20) de calibrage.

12. Procédé de détermination de la distribution de dimensions et de la concentration globale de particules dans un gaz, notamment de l'air, dans lequel un faisceau lumineux dans une cellule (10) qui est parcourue par un courant de gaz échantillon, est diffusé par les particules contenues dans le gaz, la lumière diffusée étant au moins partiellement captée par au moins un dispositif capteur (12, 12a), le dispositif capteur fournit un signal correspondant à l'intensité de la lumière diffusée et le signal est reçu par un dispositif d'évaluation (40-47, 150) qui évalue le signal, le dispositif d'évaluation comprenant un dispositif d'analyse d'impulsions (40) et au moins deux dispositifs de comptage (45, 46, 47) dont chacun est associé à un certain domaine de dimensions de particules et est commandé quand il se produit dans le signal des impulsions provenant de particules captées ayant une dimension dans le domaine correspondant, pour obtenir une distribution de dimensions de particules,
caractérisé en ce que le dispositif d'évaluation fonctionne cycliquement, un cycle de mesure comprenant les étapes suivantes :
- établir d'abord une distribution de dimensions de particules courante sans considérer le domaine de dimensions des particules les plus petites,
- intégrer le signal par un dispositif d'intégration (41, 42) pour obtenir la concentration globale des particules, et
- obtenir par le dispositif d'évaluation (40-47, 150) une valeur intermédiaire de la concentration globale à partir de la distribution de dimensions de particules courante, comparer celle-ci à la concentration globale fournie par le dispositif d'intégration (41, 42) et corriger, selon le résultat de la comparaison, la distribution de dimensions de particules courante pour fournir la distribution de dimensions de particules complète à obtenir.

13. Procédé selon la revendication 12, caractérisé en ce que la comparaison est obtenue par formation de rapports.

14. Procédé selon la revendication 12 ou 13, caractérisé en ce que la valeur intermédiaire de la concentration globale est obtenue par sommation.

15. Procédé selon l'une des revendications 12 à 14, caractérisé en ce que la limite inférieure du domaine inférieur de dimensions de particules est comprise entre 0,7 µm et 1 µm et en ce que la correction consiste à associer au domaine de dimensions de particules de 0,5 µm à la limite inférieure, la concentration résiduelle obtenue par la comparaison de la concentration globale et de la valeur intermédiaire de la concentration globale.
